(19) Europäisches Patentamt
European Patent Office
Office européen des brevets

(11) **EP 1 768 833 B1**

(12) **EUROPÄISCHE PATENTSCHRIFT**

(45) Veröffentlichungstag und Bekanntmachung des Hinweises auf die Patenterteilung:
**23.04.2014 Patentblatt 2014/17**

(21) Anmeldenummer: **05757982.3**

(22) Anmeldetag: **30.06.2005**

(51) Int Cl.:
***B29C 59/02*** *(2006.01)* ***B29C 59/16*** *(2006.01)*

(86) Internationale Anmeldenummer:
**PCT/EP2005/007043**

(87) Internationale Veröffentlichungsnummer:
**WO 2006/007948 (26.01.2006 Gazette 2006/04)**

(54) **FORMKÖRPER, VERFAHREN ZU SEINER HERSTELLUNG UND SEINE VERWENDUNG**

MOULDED BODIES, METHOD FOR PRODUCING SAID BODIES AND USE THEREOF

CORPS MOULES, PROCEDE DE FABRICATION DES MÊMES ET LEUR UTILISATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **21.07.2004 DE 102004035267**

(43) Veröffentlichungstag der Anmeldung:
**04.04.2007 Patentblatt 2007/14**

(73) Patentinhaber:
• **Karlsruher Institut für Technologie
76131 Karlsruhe (DE)**
• **GSI Helmholtzzentrum für Schwerionenforschung GmbH
64291 Darmstadt (DE)**

(72) Erfinder:
• **GISELBRECHT, Stefan
76187 Karlsruhe (DE)**
• **TRUCKENMÜLLER, Roman
74223 Flein (DE)**
• **TRAUTMANN, Christina
64291 Darmstadt (DE)**

(56) Entgegenhaltungen:
**EP-A- 0 305 123    WO-A-2004/040206
US-A- 4 364 723**

EP 1 768 833 B1

**Beschreibung**

Die Erfindung betrifft einen Formkörper, in den mindestens eine Hohlstruktur eingebracht ist, wobei die Folie und die mindestens eine Hohlstruktur eine Vielzahl von Poren aufweisen, ein Verfahren zu seiner Herstellung und seine Verwendung.

Gängige Verfahren zur Herstellung von mikroperforierten Folien (Membranen) beruhen entweder auf gerichteten physikalischen Verfahren wie Ionenspurtechnologie, Lasermikroperforation oder Lithografie, auf speziellen Ausfällungsverfahren wie Phaseninversion oder auf Verstreckverfahren. Während die beiden letzteren Verfahren im Wesentlichen zur Herstellung von flachen Mikro- und Ultrafiltrationsmembranen dienen, werden für die Mikroperforation von Mikrostrukturen in der Regel die gerichteten physikalischen Verfahren eingesetzt. In Kombination mit mikrostrukturtechnischen Verfahren wie Mikrospritzguss oder Heißprägen sind diese Verfahren aber nur an bereits vorhandenen dreidimensionalen Mikrostrukturen einsetzbar.

Die Druckschriften EP-A-305123, US-A-4364723 und WO-A-2004040206 offenbaren unterschiedliche Verfahren zur Herstellung von Formkörpern mit einer Hohlstruktur.

Eine allseitige Perforation einer solchen Mikrostruktur ist zwar im Prinzip durch Drehen und Wenden der Struktur zum Beispiel bei einer Bestrahlung denkbar, allerdings nur unter hohem Aufwand und nur bei einzelnen, freistehenden Strukturen. Im Falle von mehreren benachbarten Strukturen (Strukturarray) ist spätestens dann nur noch eine Mikroperforation senkrecht oder unter geringer Neigung zur Strukturebene möglich.

Ausgehend hiervon ist es die Aufgabe der vorliegenden Erfindung, einen Formkörper, ein Verfahren zu seiner Herstellung und seine Verwendung vorzuschlagen, die die vorher genannten Nachteile und Einschränkungen nicht aufweisen. Insbesondere soll ein Formkörper mit allseitig perforierten, dreidimensionalen, dünnwandigen polymeren Hohlstrukturen mit definierter Porengröße zwischen 10 nm und 10 μm bereitgestellt werden.

Diese Aufgabe wird im Hinblick auf den Formkörper durch die Merkmale des Anspruchs 1, im Hinblick auf das Verfahren durch die Verfahrensschritte des Anspruchs 14 und im Hinblick auf die Verwendung durch die Ansprüche 19 bis 23 gelöst. Die Unteransprüche beschreiben jeweils vorteilhafte Ausgestaltungen der Erfindung.

Ein erfindungsgemäßer Formkörper besteht aus einer Folie (Membran), die eine Foliendicke **D** zwischen 1 μm und 1000 μm, bevorzugt zwischen 10 μm und 100 μm aufweist, wobei die Foliendicke bevorzugt über große Bereiche (mehrere Quadratmeter) annähernd konstant bleibt. Die Folie selbst besteht vorzugsweise aus einem thermoplastischen Kunststoff, besonders bevorzugt aus Polymethylmethacrylat (PMMA), Polycarbonat (PC), Polyethylenterephthalat (PET), Polystyrol (PS), Polyimid (PI), Polypropylen (PP), Polyvinylidenfluorid (PVDF) oder Cycloolefincopolymer (COC).

In die Folie ist ferner mindestens eine Hohlstruktur (Kavität) eingebracht, deren geometrische Abmessungen durch die folgenden Werte gegeben sind:

- Der Außendurchmesser **d** der Hohlstruktur besitzt mindestens den doppelten Wert der Foliendicke **D**:

$$d \geq 2 * D, \qquad (1)$$

bevorzugt mindestens den dreifachen Wert der Foliendicke **D**.

- Die Höhe **h** (je nach Sicht auch: Tiefe) der Hohlstruktur weist höchstens den doppelten Wert des Außendurchmessers **d** auf:

$$h : d \leq 2 : 1 \qquad (2)$$

- Die Wandstärke (Wanddicke) **b** der Hohlstruktur besitzt etwa die gleiche Größenordnung oder ist eine Größenordnung geringer als die Foliendicke **D**, d. h. sie nimmt einen Wert zwischen dem 0,02-fachen der Foliendicke D und der Foliendicke D an:

$$0,02 * D \leq b \leq D \qquad (3)$$

- Der lokale Krümmungsradius r der Hohlstruktur liegt in der Größenordnung der jeweiligen lokalen Wandstärke **b**, d.h. er besitzt einen Wert zwischen dem 0,2-fachen und dem 5-fachen der Wandstärke **b**:

$$0{,}2 * b \leq r \leq 5 * b \qquad\qquad (4)$$

In einer bevorzugten Ausgestaltung weist die Hohlstruktur einen Hinterschnitt auf und nimmt daher im Querschnitt die Form einer Ω-Struktur an. Im Falle dass die Foliendicke **D,** der Außendurchmesser **d** der Hohlstrukturen und die Höhe **h** der Hohlstruktur dieselbe Größenordnung besitzen, wobei aber Gleichung (1) nach wie vor erfüllt werden muss, ergibt sich eine Ω-Struktur mit einer ausgeprägten Verteilungsfunktion der Wandstärke **b.**

In die Folie sind bevorzugt mehrere, besonders bevorzugt eine Vielzahl von Hohlstrukturen eingebracht, deren jeweiliger Abstand **g** einen Wert annimmt, der mindestens dem Außendurchmesser **d** der jeweiligen Hohlstrukturen entspricht:

$$g \geq d \qquad\qquad (5)$$

Diese untere Grenze für den Abstand (Mindestabstand) ergibt sich im Wesentlichen aus der mechanischen Festigkeit des Folien-Verformungswerkzeugs. Je nach Material und Fertigungsmethode lassen sich sehr schmale und für die Formgebung noch stabile Stege mit einer Breite von wenigen Mikrometern erzeugen.

Schließlich weist der Formkörper, d.h. sowohl die Folie als auch die Hohlstrukturen, eine Vielzahl von Poren auf, deren jeweiliger Durchmesser $\delta$ bevorzugt einen Wert zwischen 10 nm und 10 $\mu$m annimmt. Vorzugsweise sind die Poren statistisch über den gesamten Formkörper, d.h. über die Folie und die Hohlstrukturen verteilt, wobei es vorkommen kann, dass sich einzelne Poren überlappen. In einer alternativen Ausgestaltung sind die Poren geordnet mit einem Abstand ß über die Folie und die Hohlstrukturen verteilt.

Ein erfindungsgemäßer Formkörper lässt sich mit dem folgenden Verfahren herstellen. Gemäß Verfahrensschritt a) wird zunächst eine Folie bereitgestellt, die eine Dicke zwischen 1 $\mu$m und 1000 $\mu$m, bevorzugt zwischen 10 $\mu$m und 100 $\mu$m, aufweist und aus einem thermoplastischen Kunststoff wie vorzugsweise Polymethylmethacrylat (PMMA), Polycarbonat (PC), Polyethylenterephthalat (PET), Polystyrol (PS), Polyimid (PI), Polypropylen (PP), Polyvinylidenfluorid (PVDF) oder Cycloolefincopolymer (COC) besteht.

Anschließend wird die Folie gemäß Verfahrensschritt b) derart mit einer ionisierenden Strahlung beaufschlagt, dass damit bestrahlte Bereiche innerhalb der Folie entstehen. Das Bestrahlen der Folie erfolgt vorzugsweise mit Schwerionen, beispielsweise mit Ionen der Sorte $^{132}Xe^{21+}$. Die spezifische Energie ist mindestens so groß zu wählen, dass die Durchdringung der Folie gewährleistet ist. Die Fluenz der Schwerionen wird so gewählt, um damit die mittlere Porendichte pro Fläche einzustellen. Bevorzugt weisen die die Schwerionen eine spezifische Energie oberhalb von 0,1 MeV/Nukleon auf.

Der Bestrahlungswinkel zur Folienoberfläche beträgt vorzugsweise annähernd 90°, d.h. die Folie steht im Wesentlichen senkrecht zur Richtung des Schwerionenstrahls. An Stelle von Schwerionen ist jede andere ionisierende Strahlung geeignet, mit der sich Bereiche in die Folie einbringen lassen, die in einem späteren Entwicklungsschritt als Poren geeigneter Größe entfernt werden. Darüber hinaus lassen sich für die Bestrahlung der Folie Masken einsetzen, um lokal begrenzte Perforationsbereiche bzw. Bereiche, die vollständig ausgelöst werden sollen, herzustellen.

Entscheidend für das erfindungsgemäße Verfahren ist, dass im sich hierzu anschließenden Verfahrensschritt c) das thermische Verformen der Folie zu einem Formkörper erfolgt. Hierfür kann beispielsweise das unter den Namen *Mikrothermoformen* bekannte Verfahren eingesetzt werden. Beim Thermoformen erfolgt die Umformung einer Folie in einer entropieelastischen Phase und nicht in einer Schmelzphase des Kunststoffs, damit die Korrelation von Bestrahlungsdosis und -ort nicht verloren geht. Wichtig ist, dass die Temperatur im Bereich der Erweichungstemperatur (Glasübergangstemperatur) des thermoplastischen Kunststoffs, d.h. unterhalb von dessen Schmelztemperatur bleibt, um eine Ausheilung der Spuren bzw. ein Verschmieren der lokal deponierten Dosis zu vermeiden. Dieses Ziel wird durch die vergleichsweise niedrige Umformtemperatur und die geringe Umformdauer erreicht.

Das erfindungsgemäße Verfahren basiert auf der Zwischenschaltung eines mikrostrukturtechnischen Formprozesses zwischen der Bestrahlung des polymeren Substrates und des in der Regel ansonsten direkt anschließenden Entwicklungsschrittes. Wesentlich am vorgeschlagenen Verfahren ist das Thermoformen eines durch ionisierende Bestrahlung lokal modifizierten polymeren Werkstoffes für die spätere Entfernung dieser Bereiche zur Erzeugung perforierter oder netzartiger dünnwandiger dreidimensionaler Hohlstrukturen.

Um sowohl die Seitenwände als auch den Boden von dünnwandigen dreidimensionalen Mikro-Hohlstrukturen perforieren zu können, wird ein flaches, technisches Folienhalbzeug einer ionisierenden Strahlung vorzugsweise mit ionisierenden Partikeln ausgesetzt. Im Gegensatz zur klassischen Herstellung von perforierten Membranen wird die bestrahlte Folie mit den latent vorhandenen Spuren also vor (!) der Entwicklung der Poren durch Ätzen und Lösen mikrostrukturiert.

Bei dieser Art der Formgebung sind solche mikrotechnische Verfahren möglich, mit denen das Polymer nicht in eine schmelzflüssige Phase überführt wird, da sonst eine Ausheilung der Spuren bzw. ein Verschmieren der lokal deponierten Dosis stattfindet. Mikrothermoformen ist jedoch ein mikrotechnisches Verfahren, das einen entropieelastischen Zustand während des Formvorgangs besitzt, so dass der materielle Zusammenhalt des Polymers gewährleistet wird, da die Thermoplaste nur im unmittelbaren Bereich ihrer Erweichungstemperatur verformt werden.

Die thermoplastischen Halbzeuge werden analog zum makroskopischen Thermoformen unter Ausdünnung der Wanddicke räumlich in eine negative Form verstreckt. Durch die Verstreckung des Thermoplasten bleiben die angelegten Spuren an sich erhalten, ändern aber entsprechend der jeweiligen lokalen Verstreckung ihre relative Position zueinander, d.h. die Spurendichte pro Einheitsfläche nimmt mit Zunahme der Verstreckung ab.

Nachdem die nach wie vor geschlossene thermoplastische Folie mittels des Mikrothermoformens dreidimensional mikrostrukturiert wurde, lassen sich gemäß Verfahrensschritt d) dann die bestrahlten Bereiche aufgrund ihrer veränderten physikalischen Eigenschaften mit einer geeigneten Substanz frei ätzen bzw. auflösen, wodurch Poren im Formkörper gebildet werden, die vorzugsweise einen Durchmesser $\delta$ zwischen 10 nm und 10 $\mu$m aufweisen. In einer besonders bevorzugten Ausführung erfolgt das Entfernen (Auflösen) der bestrahlten Bereiche im Formkörper mittels nasschemischer Ätzung zum Beispiel mit einer starken Lauge. Der gewünschte Durchmesser der Poren wird über die Parameter (Dauer, Temperatur) des Ätzschritts eingestellt.

Schließlich wird gemäß Verfahrensschritt e) der erfindungsgemäß hergestellte Formkörper entnommen, der eine dreidimensionale Hohlstruktur mit dünnen Wänden darstellt, die in allen Bereichen der Seitenwände und des Bodens Poren definierter Größe besitzt, die zudem in allen diesen Bereichen weitgehend senkrecht zur Wand ausgerichtet sind.

Mit dem erfindungsgemäßen Verfahren hergestellte Formkörper lassen sich vielseitig einsetzen. Ein Formkörper mit einer einzelnen oder mehreren Hohlstrukturen eignet sich als Gehäuse für mikrostrukturierte Teile (Komponenten) oder zum Sammeln von Mikro- bzw. Nanopartikeln. Durch Perfusion verschiedener Reaktionsmedien lassen sich zum Beispiel die Oberflächen der genannten Partikel funktionalisieren.

Weiterhin sind mit Formkörpern, deren Hohlstrukturen sowohl einen Innendurchmesser $d_i$, der durch den Außendurchmesser $d$ abzüglich des Doppelten der Wandstärke $b$ gegeben ist, als auch eine Höhe $h$ im Bereich von 10-50 $\mu$m aufweisen, biologische oder pharmazeutische Einzeluntersuchungen von Biomolekülen, prokaryontischen oder eukaryontischen Zellen möglich.

Formkörper, deren Hohlstrukturen sowohl einen Innendurchmesser $d_i$ als auch eine Höhe $h$ im Bereich von 50-500 $\mu$m aufweisen und deren Dimensionen damit im Bereich gängiger Sphäroide liegen, lassen sich für die dreidimensionale Kultivierung von prokaryontischen oder eukaryontischen Zellen verwenden. Beispiele hierfür sind die Kultivierung von Zellen für das Studium der Angiogenese, der Invasivität (Tumorforschung) oder der Zell-Zell-Kommunikation.

In einer bevorzugten Ausgestaltung sind mehrere bzw. eine Vielzahl von Hohlstrukturen in einer Ebene angeordnet. Hierbei ist die Anordnung der Hohlstrukturen in einer Reihe oder eine flächige Verteilung über die gesamte oder Teile der Folie möglich. Im letzteren Fall sind die Hohlstrukturen vorzugsweise in Reihen und Spalten bzw. auf Lücke angeordnet.

Derartige Formkörper lassen sich als adressierbare Kavitäten zur Immobilisierung bzw. Magazinierung von Mikro- oder Nanopartikeln, deren Oberflächen durch Perfusion von Reaktionsmedien funktionalisiert werden können, einsetzen.

Eine bevorzugte Verwendung der erfindungsgemäßen Formkörper liegt im Einsatz als mikrostrukturierter Zellkulturträger für die dreidimensionale Kultivierung von prokaryontischen oder eukaryontischen Zellen, wie sie zum Beispiel aus der DE 41 32 379 A1 bekannt ist. Hierdurch wird die Immobilisierung von Zellen, die durch perfundierende Medien versorgt werden, möglich. Hierfür bevorzugte Parameter sind:

Foliendicke **D:**       20-100 $\mu$m,
Wandstärke **b:**       5-10 $\mu$m,
Hohlstruktur:       Innendurchmesser **d$_i$:** 100-300 $\mu$m, Höhe **h:** 100-300 $\mu$m,
$10^6$-$10^7$ Poren/cm$^2$ mit Durchmesser $\delta$ 1-5 $\mu$m.

Weiterhin eignen sich erfindungsgemäße Formkörper aufgrund ihrer vergrößerten Oberfläche zur Immobilisierung von Enzymen oder oberflächenaktiven Katalysatoren. Immobilisierte Enzyme auf der vergrößerten Oberfläche ermöglichen den Aufbau eines Biosensors, der nicht nur umströmt, sondern direkt vom Medium (Fluid) durchströmt wird.

Erfindungsgemäße Formkörper lassen sich bei mechanischen, thermischen, elektrischen, magnetischen oder chemischen Trennverfahren einsetzen. In Verbindung mit geeigneten Parametern der Folie eignen sich derartige Formkörper für die Filtration von Mikroorganismen, darunter Viren, Phagen bzw. Bakterien, oder Biomolekülen wie z. B. löslichen Proteinen aus einem durchströmenden Medium.

Weiterhin eignen sich erfindungsgemäße Formkörper als Zerstäuber. Substanzen, die sich in flüssiger Phase nicht mischen lassen, werden aus den Poren benachbarter Hohlstrukturen in eine Form fein verteilter Tröpfchen (Aerosol) überführt und auf diese Weise gemischt.

In einer weiteren bevorzugten Ausgestaltung wird ein erfindungsgemäßer Formkörper einfach oder spiralförmig gerollt, wobei die Hohlstrukturen entweder nach innen oder nach außen gerichtet sind. Alternativ wird ein erfindungsgemäßer Formkörper gefaltet oder gewellt. Schließlich können mehrere Formkörper mit denselben oder unterschiedlichen Parametern vorhanden sein, die nebeneinander, übereinander oder ineinander angeordnet sind, die sich z. B. in der Membranfiltration verwenden lassen.

Neben einem Einsatz zur Immobilisierung von Enzymen oder für oberflächenaktive Katalysatoren lassen sich damit zum Beispiel Mikro- oder Nanopartikel über mehrere Lagen mit abgestufter Porengröße nach ihrer Größe seriell trennen. Ebenso eignen sich derartige Formkörper als dreidimensionale Filter mit definierter Porengröße beispielsweise zur Stofftrennung in der Pharmaindustrie, der Biotechnologie usw.

Ein oder mehrere erfindungsgemäße Formkörper in Form einer Röhre stellen ein Modul mit einer im Vergleich zu einer gängigen Hohlfaser wesentlich vergrößerten Oberfläche dar. Ein derartiges Modul lässt sich z. B. zur Gewinnung von monoklonalen Antikörpern oder als extrakorporales Organunterstützungssystem verwenden.

Ein weiterer Einsatzbereich liegt in der Bereitstellung dünnwandiger mikroskopischer Kanal- und Reservoirstrukturen, die definiert lokalisierte und definiert große Öffnungen bzw. Poren etwa zur Beprobung, Entlüftung, Stofftrennung usw. aufweisen. Derartige Formkörper finden Einsatz zum Beispiel in $\mu$-Kapillarelektrophorese-Chips oder in Lab-on-a-Chip Systemen.

Die Erfindung weist insbesondere die folgenden Vorteile auf:

- Einfache Bestrahlung der flachen polymeren Folie vor dem Mikrostrukturierungsprozess;

- Einfache Bestrahlung großer unstrukturierter Flächen z. B. von Endlosfolien;

- vereinfachte Verwendung von Masken (direkter Maskenkontakt) für die Erzeugung von lokal begrenzten Perforationsbereichen oder von Bereichen, die komplett ausgelöst werden sollen;

- mögliche allseitige Mikroperforation von dreidimensionalen Mikro-Hohlstrukturen;

- Höhere Produktionssicherheit, da der Schritt der Bestrahlung im Vorfeld einer in der Regel aufwendigen und kostenintensiven Mikrostrukturierung an kostengünstigen Folienhalbzeugen durchgeführt wird und somit die Verursachung von Ausschuss durch Bestrahlungsfehler an bereits bestehenden teuren Mikrostrukturen umgangen wird.

Die Erfindung wird im Folgenden anhand von Ausführungsbeispielen und den Figuren näher erläutert. Es zeigen:

**Fig. 1**  Schematischer Querschnitt durch einen Formkörper mit perforierten Hohlstrukturen.

**Fig. 2**  Schematischer Querschnitt durch einen Formkörper, der eine Hohlstruktur mit Hinterschnitt ($\Omega$-Struktur) aufweist.

**Fig. 3**  Schematischer Querschnitt durch eine Anordnung von mehreren Hohlstrukturen in einer Ebene:

**a)** in einer Reihe;
**b)** flächig in Form von Reihen und Spalten;
**c)** flächig auf Lücke.

**Fig. 4**  Schematische Querschnitte durch dreidimensionale Anordnungen von Hohlstrukturen:

**a)** einfach gerollt, Hohlstrukturen nach innen gerichtet;
**b)** spiralförmig gerollt, Hohlstrukturen nach innen gerichtet;
**c)** einfach gerollt, Hohlstrukturen nach außen gerichtet;

**Fig. 5**  Schematische Querschnitte durch dreidimensionale Anordnungen von zwei Formkörpern.

**Fig. 6**  Rasterelektronenmikroskopische Aufnahme des Schnittes durch eine Hohlstruktur vor Verfahrensschritt d).

**Fig. 7**  Rasterelektronenmikroskopische Aufnahme der geschnittenen Hohlstruktur aus **Fig. 6** nach Verfahrensschritt d).

**Fig. 8**  Rasterelektronenmikroskopische Aufnahme einer weiteren geschnittenen Hohlstruktur nach Verfahrensschritt d).

**Fig. 9**  Schnitt durch den Außenbereich des Formkörpers aus den **Fig. 6 bis 8** (Vereinzelungsstruktur).

**Fig. 10**  Ausschnitt aus **Fig. 9** zur weiteren Demonstrierung der Durchgängigkeit der Poren.

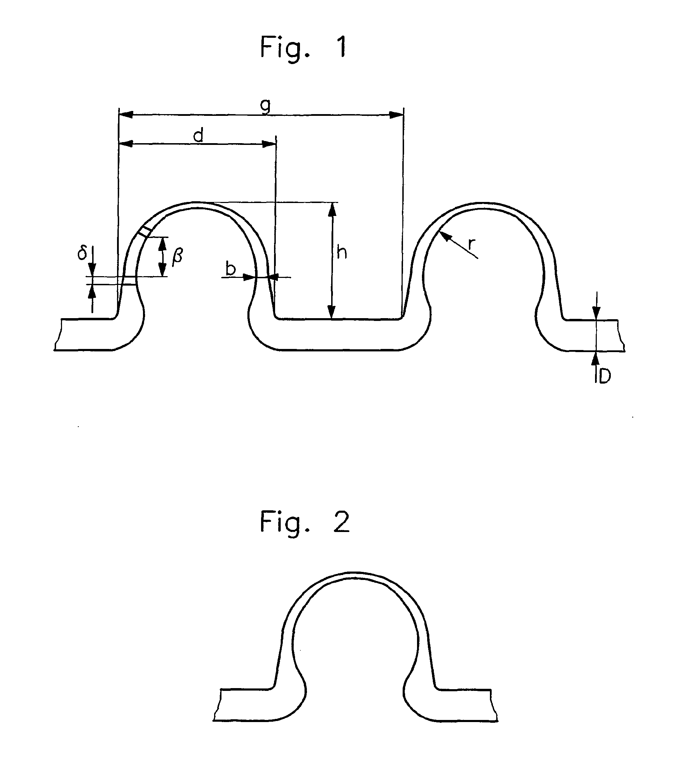

**Fig. 1** zeigt schematisch einen Querschnitt durch einen Formkörper mit perforierten Hohlstrukturen. Die in dieser Figur erwähnten Parameter bedeuten im Einzelnen:

**D**  Dicke der Folie
**d**  Außendurchmesser der Hohlstruktur
**h**  Höhe der Hohlstruktur
**b**  Wandstärke der Hohlstruktur
**r**  Krümmungsradius der Hohlstruktur
**g**  Abstand zweier benachbarter Hohlstrukturen
$\delta$  Durchmesser der Poren
**ß**  Abstand der Poren

In **Fig. 2** ist schematisch der Querschnitt durch einen Formkörper mit einer Hohlstruktur dargestellt, die einen echten Hinterschnitt aufweist, d. h. eine so genannte $\Omega$-Struktur. Hieraus ist die ausgeprägte Verteilungsfunktion der Wandstärke **b** ersichtlich.

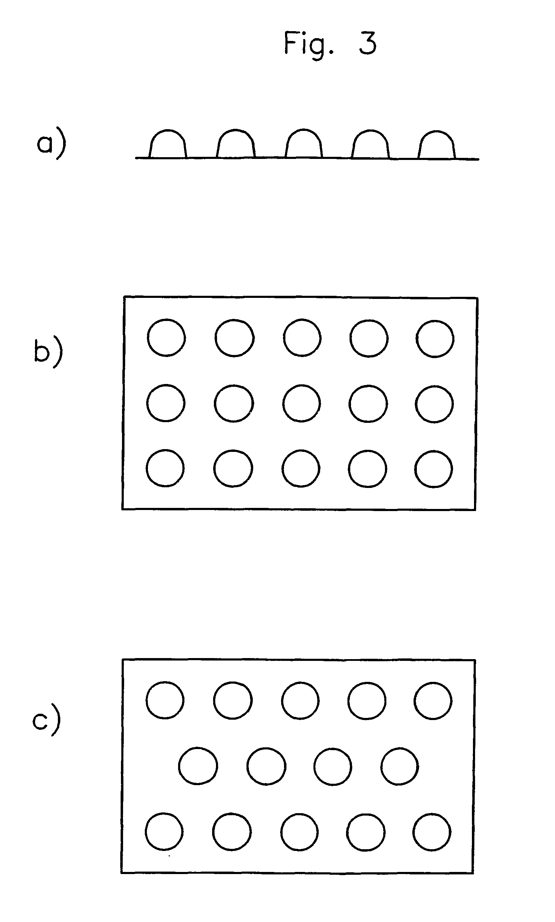

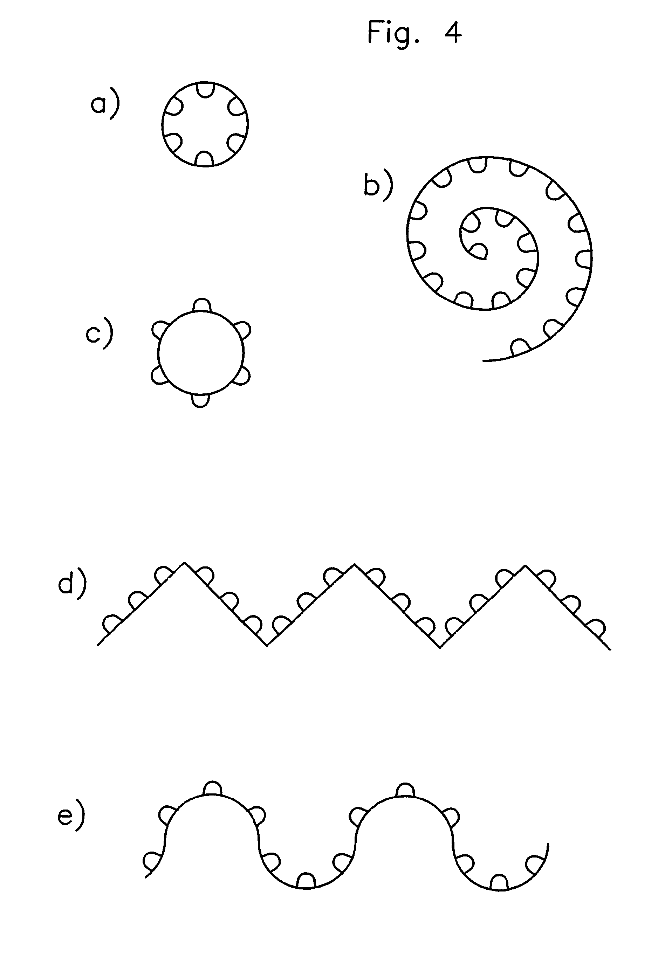

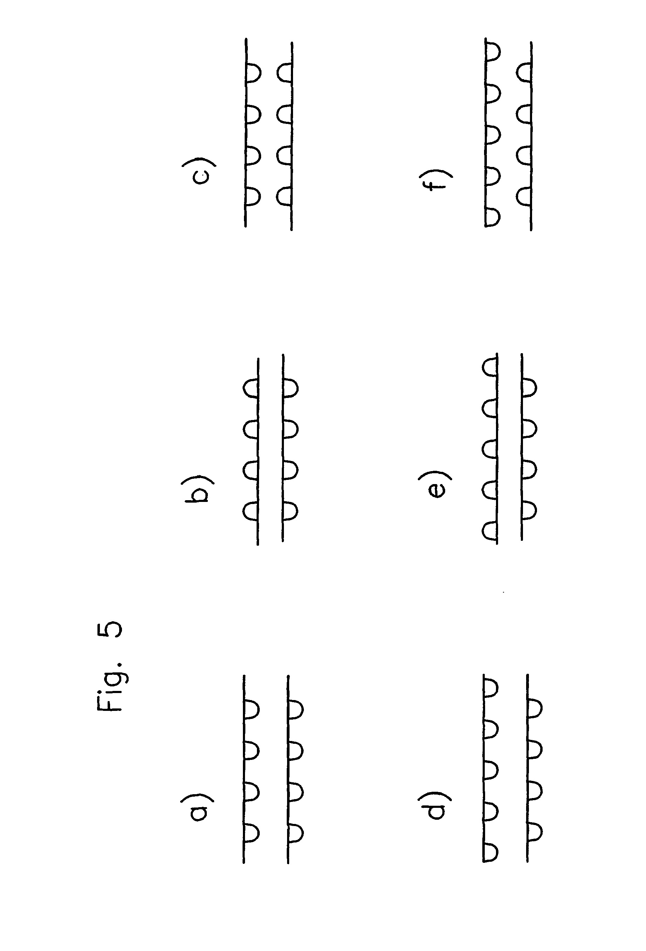

**Fig. 3** zeigt einige Möglichkeiten, wie mehrere Hohlstrukturen in einer Ebene angeordnet sein können, während in **Fig. 4** mögliche räumliche Anordnungen von erfindungsgemäßen Formkörpern dargestellt sind. **Fig. 5** zeigt einige Möglichkeiten, wie sich zwei Formkörper in Form von Stacks oder Sandwiches anordnen lassen. Die Hohlformen der einzelnen Formkörper können dabei gleich **(a, d)** oder entgegengesetzt **(b, c, e, f)** gerichtet, in Reihe **(a-c)** oder auf Lücke **(d-f)** angeordnet bzw. nach innen oder nach außen gerichtet **(c** gegenüber **b, f** gegenüber **e)** sein.

Zur Durchführung des erfindungsgemäßen Verfahrens wurde als Folie eine Gießfolie aus Polycarbonat (PC) mit einer Dicke von 50 $\mu$m verwendet. Die Bestrahlung der Folie erfolgte am Linearbeschleuniger UNILAC der Gesellschaft für Schwerionenforschung (GSI) Darmstadt mit Schwerionen der Sorte $^{132}Xe^{21+}$, die eine spezifische Energie von 11.4 MeV/Nukleon und eine Fluenz von $10^6$ Ionen/cm$^2$ aufwiesen. Der Bestrahlungswinkel zur Oberfläche der Folie betrug 90°.

Für das anschließende Mikrothermoformen wurde die Folie bei 80°C für 45 Minuten vakuumgetrocknet. Das Mikrothermoformen erfolgte mit einem mechanischen Anpressdruck von 80 000 N bei einer Formtemperatur von 164°C und einem Gasdruck von 5 MPa (50 bar). Die Entformtemperatur betrug ca. 70°C. Es wurden Hohlstrukturen mit einer Tiefe von etwa 240 $\mu$m bis 250 $\mu$m erhalten.

Für die Porenbildung wurde als Ätzmedium eine Lösung aus 5 N NaOH mit 10% Methanol verwendet. Das Ätzen erfolgte über 6 Stunden bei einer Temperatur von 50°C. Es ergaben sich Poren mit einer Größe von im Bereich zwischen 4 $\mu$m und 5 $\mu$m.

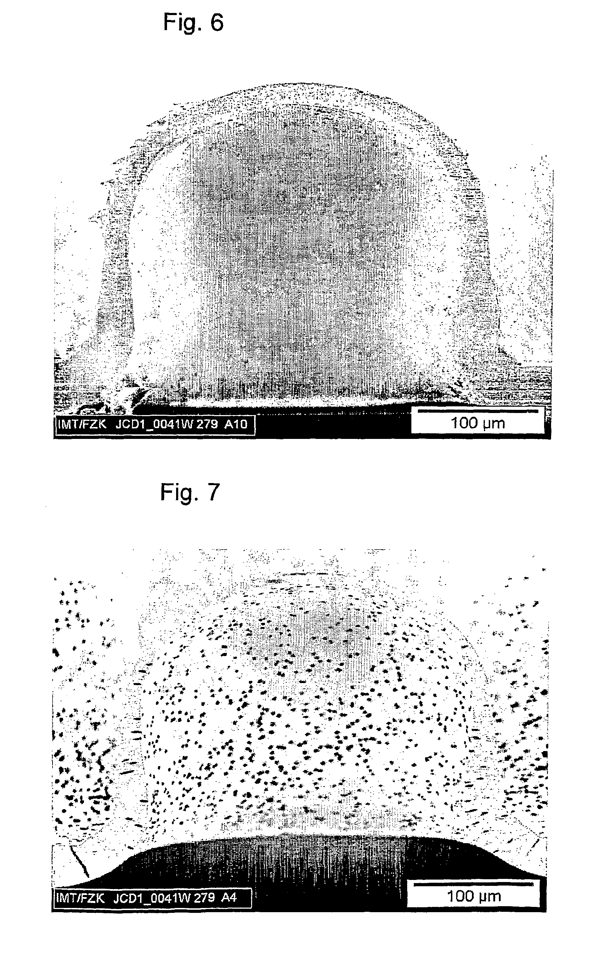

**Fig. 6** zeigt die rasterelektronenmikroskopische Aufnahme eines Schnittes durch eine Hohlstruktur (Kavität) einer mikrothermogeformten 50 $\mu$m dicken Folie aus Polycarbonat (PC). Die maximale Tiefe beträgt ca. 250 $\mu$m, die Tiefe in Schnittebene ist etwas geringer. Die Folie wurde vor dem Formvorgang mit Schwerionen bestrahlt.

In **Fig. 7** ist die rasterelektronenmikroskopische Aufnahme der geschnittenen Hohlstruktur der in **Fig. 6** bereits gezeigten mikrothermogeformten Folie aus Polycarbonat (PC) nach dem Ätzschritt dargestellt. Die Durchgängigkeit der Poren ist in einigen Fällen deutlich zu erkennen. Die Orientierung der Poren stimmt nicht genau mit der Schnittebene überein, so dass nur einige wenige Poren in ihrer vollen Länge als Querschnitt zu erkennen sind.

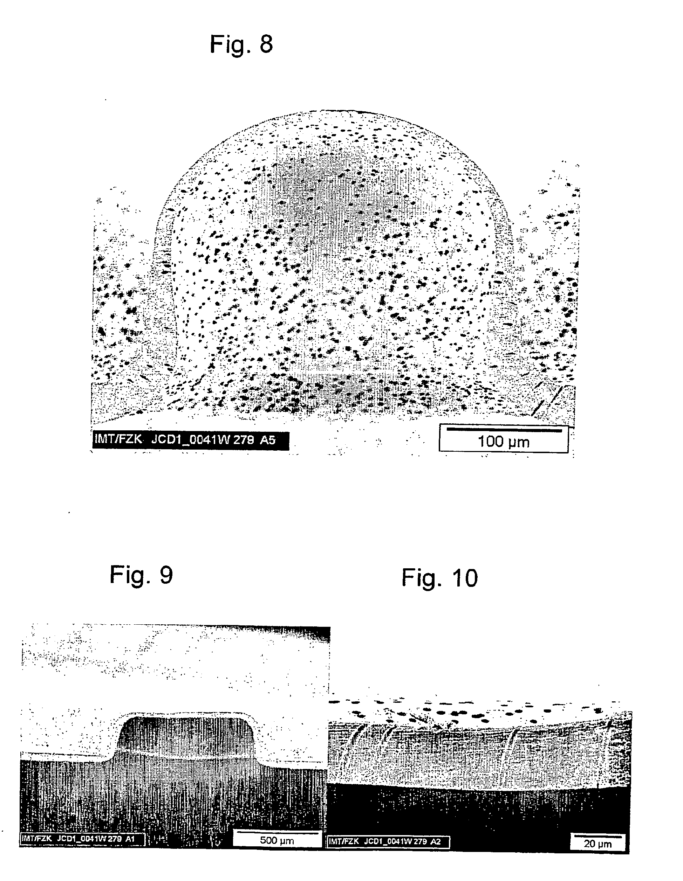

In **Fig. 8** ist die rasterelektronenmikroskopische Aufnahme einer weiteren geschnittenen Hohlstruktur der in **Fig. 6** bereits gezeigten mikrothermogeformten Folie aus Polycarbonat (PC) nach Verfahrensschritt d) dargestellt. Die Durchgängigkeit der Poren ist auch hier in einigen Fällen deutlich zu erkennen.

**Fig. 9** zeigt einen Schnitt durch den Außenbereich der in den **Fig. 5** bis **8** bereits gezeigten mikrothermogeformten Folie aus Polycarbonat (Vereinzelungsstruktur). In **Fig. 10** ist ein vergrößerter Ausschnitt aus **Fig. 9** dargestellt, dem ebenfalls die Durchgängigkeit der Poren entnommen werden kann.

**Patentansprüche**

1.  Formkörper, bestehend aus

    a) einer Folie, die eine Foliendicke **D** zwischen 1 $\mu$m und 1000 $\mu$m aufweist, in die
    b) mindestens eine Hohlstruktur eingebracht ist,

       - deren Außendurchmesser **d** mindestens den doppelten Wert der Foliendicke **D** aufweist,
       - deren Höhe **h** höchstens den doppelten Wert des Außendurchmessers **d** annimmt,
       - deren Wandstärke **b** zwischen dem 0,02-fachen der Foliendicke **D** und der Foliendicke **D** liegt und
       - deren lokaler Krümmungsradius **r** zwischen dem 0,2-fachen und dem 5-fachen der Wandstärke **b** liegt, wobei

c) die Folie und die mindestens eine Hohlstruktur eine Vielzahl von Poren aufweisen.

2. Formkörper nach Anspruch 1, **dadurch gekennzeichnet, dass** die mindestens eine Hohlstruktur einen Hinterschnitt aufweist.

3. Formkörper nach Anspruch 1 oder 2, **dadurch gekennzeichnet, dass** die Poren einen Durchmesser $\delta$ zwischen 10 nm und 10 $\mu$m besitzen.

4. Formkörper nach einem der Ansprüche 1 bis 3, **dadurch gekennzeichnet, dass** die Poren statistisch über die Folie und die mindestens eine Hohlstruktur verteilt sind.

5. Formkörper nach einem der Ansprüche 1 bis 4, **dadurch gekennzeichnet, dass** die Folie aus einem thermoplastischen Kunststoff besteht.

6. Formkörper nach Anspruch 5, **dadurch gekennzeichnet, dass** die Folie aus Polymethylmethacrylat (PMMA), Polycarbonat (PC), Polyethylenterephthalat (PET), Polystyrol (PS), Polyimid (PI), Polypropylen (PP), Polyvinylidenfluorid (PVDF) oder Cycloolefincopolymer (COC) besteht.

7. Formkörper nach einem der Ansprüche 1 bis 6, **dadurch gekennzeichnet, dass** in die Folie mehrere Hohlstrukturen eingebracht sind, deren jeweiliger Abstand **g** mindestens dem Außendurchmesser **d** der Hohlstrukturen entspricht.

8. Formkörper nach Anspruch 7, **dadurch gekennzeichnet, dass** die Hohlstrukturen in einer Reihe angeordnet sind.

9. Formkörper nach Anspruch 7, **dadurch gekennzeichnet, dass** die Hohlstrukturen über die Folie verteilt sind.

10. Formkörper nach Anspruch 9, **dadurch gekennzeichnet, dass** die Hohlstrukturen in Reihen und Spalten oder auf Lücke angeordnet sind.

11. Einfach oder spiralförmig gerollter Formkörper nach einem der Ansprüche 7 bis 10, wobei die Hohlstrukturen nach innen oder nach außen gerichtet sind.

12. Gefalteter oder gewellter Formkörper nach einem der Ansprüche 7 bis 11.

13. Neben-, über- oder ineinander angeordnete Formkörper nach einem der Ansprüche 7 bis 12.

14. Verfahren zur Herstellung eines Formkörpers mit den Verfahrensschritten

   a) Bereitstellen einer Folie aus einem thermoplastischen Kunststoff,
   b) Bestrahlen der Folie mit ionisierender Strahlung, wodurch bestrahlte Bereiche in der Folie entstehen,
   c) Thermisches Verformen der Folie zu einem Formkörper, wobei die Temperatur unterhalb der Schmelztemperatur des thermoplastischen Kunststoffs bleibt,
   d) Entfernen der bestrahlten Bereiche, wodurch Poren im Formkörper gebildet werden, und
   e) Entnehmen des Formkörpers.

15. Verfahren nach Anspruch 14, **dadurch gekennzeichnet, dass** das Bestrahlen der Folie durch eine Maske hindurch erfolgt.

16. Verfahren nach Anspruch 14 oder 15, **dadurch gekennzeichnet, dass** das Bestrahlen der Folie mit Schwerionen erfolgt.

17. Verfahren nach Anspruch 16, **dadurch gekennzeichnet, dass** die Schwerionen eine spezifische Energie oberhalb von 0,1 MeV/Nukleon aufweisen.

18. Verfahren nach einem der Ansprüche 14 bis 17, **dadurch gekennzeichnet, dass** das Entfernen der bestrahlten Bereiche mittels nasschemischer Ätzung erfolgt.

**19.** Verwendung eines Formkörpers nach einem der Ansprüche 1 bis 13 als Filter oder Zerstäuber.

**20.** Verwendung eines Formkörpers nach einem der Ansprüche 1 bis 13 als Gehäuse für mikrostrukturierte Teile.

**21.** Verwendung eines Formkörpers nach einem der Ansprüche 1 bis 13 zur Immobilisierung von anorganischen oder organischen Molekülen, von Biomolekülen, prokaryontischen oder eukaryontischen Zellen.

**22.** Verwendung eines Formkörpers nach einem der Ansprüche 1 bis 13 zur Kultivierung von prokaryontischen oder eukaryontischen Zellen.

**23.** Verwendung eines Formkörpers nach einem der Ansprüche 1 bis 13 als Biosensor oder Bioreaktor.

**Claims**

**1.** A moulded body comprising of

a) a film exhibiting a film thickness **D** of between 1 $\mu$m and 1000 $\mu$m into which
b) at least one hollow structure is introduced,

- whose external diameter **d** exhibits at least twice the value of film thickness **D,**
- whose maximum height **h** assumes twice the value of external diameter **d,**
- whose wall thickness **b** lies between 0.02 times film thickness **D** and film thickness **D,** and
- whose local radius of curvature r lies between 0.2 times and 5 times wall thickness **b,** wherein

c) the film and the at least one hollow structure exhibit a plurality of pores.

**2.** The moulded body of claim 1 wherein the at least one hollow structure exhibits an undercut.

**3.** The moulded body of claim 1 or 2 wherein the pores possess a diameter $\delta$ of between 10 nm and 10 $\mu$m.

**4.** The moulded body of any one of claims 1 to 3 wherein the pores are distributed statistically over the film and over the at least one hollow structure.

**5.** The moulded body of any one of claims 1 to 4 wherein the film consists of a thermoplastic.

**6.** The moulded body of claim 5 wherein the film consists of polymethylmethacrylate (PMMA), polycarbonate (PC), polyethylene terephthalate (PET), polystyrene (PS), polyimide (PI), polypropylene (PP), polyvinylidene difluoride (PVDF) or cycloolefin copolymer (COC).

**7.** The moulded body of any one of claims 1 to 6 wherein a plurality of hollow structures whose respective pitch **g** is at least equal to the external diameter **d** of the hollow structures are introduced into the film.

**8.** The moulded body of claim 7 wherein the hollow structures are arranged in a row.

**9.** The moulded body of claim 7 wherein the hollow structures are distributed over the film.

**10.** The moulded body of claim 9 wherein the hollow structures are arranged in rows and columns or staggered.

**11.** A simply rolled or spirally rolled moulded body of any one of claims 7 to 10 wherein the hollow structures face inwards or outwards.

**12.** A folded or corrugated moulded body according to any one of claims 7 to 11.

**13.** The moulded bodies of any one of claims 7 to 12 arranged adjacent to, above or inside one another.

**14.** A method for producing a moulded body, having the process steps

a) Providing a film made from a thermoplastic,
b) Irradiating the film with ionising radiation so as to create irradiated regions in the film,
c) Thermal moulding of the film into a moulded body, with the temperature remaining below the melting temperature of the thermoplastic,
d) Removing the irradiated regions so as to form pores in the moulded body, and
e) Taking out the moulded body.

**15.** The method of claim 14 wherein the irradiating of the film is effected through a mask.

**16.** The method of claim 14 or 15 wherein the irradiating of the film is effected with heavy ions.

**17.** The method of claim 16 wherein the heavy ions exhibit a specific energy above 0.1 MeV/nucleon.

**18.** The method of any one of claims 14 to 17 wherein the irradiated regions are removed by way of wet-chemical etching.

**19.** The use of a moulded body according to any one of claims 1 to 13 as a filter or atomizer.

**20.** The use of a moulded body according to any one of claims 1 to 13 as a housing for microstructured parts.

**21.** The use of a moulded body according to any one of claims 1 to 13 for immobilizing inorganic or organic molecules, biomolecules, prokaryotic or eukaryotic cells.

**22.** The use of a moulded body according to any one of claims 1 to 13 for cultivating prokaryotic or eukaryotic cells.

**23.** The use of a moulded body according to any one of claims 1 to 13 as a biosensor or bioreactor.

**Revendications**

**1.** Corps moulé constitué :

a) d'un film ayant une épaisseur de film D comprise entre 1 $\mu$m et 1.000 $\mu$m, dans lequel
b) est insérée au moins une structure creuse,

- dont le diamètre extérieur d est égal au moins au double de l'épaisseur D du film,
- dont la hauteur h est égale au moins au double du diamètre externe d,
- dont l'épaisseur de paroi b est située entre 0,02 fois l'épaisseur du film D et l'épaisseur du film D, et
- dont le rayon de courbure local r est compris entre 0,2 fois et 5 fois l'épaisseur de paroi b,

c) le film et la structure creuse comprenant une série de pores.

**2.** Corps moulé conforme à la revendication 1,
**caractérisé en ce que**
la structure creuse comporte une contre-dépouille.

**3.** Corps moulé conforme à la revendication 1 ou 2,
**caractérisé en ce que**
les pores ont un diamètre $\delta$ compris entre 10 nm et 10 $\mu$m.

**4.** Corps moulé conforme à l'une des revendications 1 à 3,
**caractérisé en ce que**
les pores sont répartis de manière statistique sur le film et sur la structure creuse.

**5.** Corps moulé conforme à l'une des revendications 1 à 4,
**caractérisé en ce que**
la feuille est réalisée en un matériau synthétique thermoplastique.

**6.** Corps moulé conforme à la revendication 5,

**caractérisé en ce que**
le film est réalisé en polyméthyl métacrylate (PMMA), en polycarbonate (PC), en polyéthylène téréphtalate (PET), en polystyrène (PS), en polyimide (PI), en polypropylène (PP), en fluorure de polyvinylidène (PVDF) ou en des copolymères de cyclo-oléfines (COC).

7. Corps moulé conforme à l'une des revendications 1 à 6,
**caractérisé en ce que**
dans le film sont insérées plusieurs structures creuses dont la distance g respective correspond au moins au diamètre externe d des structures creuses.

8. Corps moulé conforme à la revendication 7,
**caractérisé en ce que**
les structures creuses sont disposées sur une rangée.

9. Corps moulé conforme à la revendication 7,
**caractérisé en ce que**
les structures creuses sont réparties sur le film.

10. Corps moulé conforme à la revendication 9,
**caractérisé en ce que**
les structures creuses sont déposées sur des rangées et des colonnes ou sur des lacunes.

11. Corps moulé à enroulement simple ou en hélice conforme à l'une des revendications 7 à 10, dans lequel les structures creuses sont orientées vers l'intérieur ou vers l'extérieur.

12. Corps moulé replié ou ondulé conforme à l'une des revendications 7 à 11.

13. Corps moulés situés au voisinage, au-dessous ou les uns dans les autres conformes à l'une des revendications 7 à 12.

14. Procédé d'obtention d'un corps moulé comprenant les étapes consistant à :

   a) préparer un film en un matériau synthétique thermoplastique,
   b) irradier le film avec un rayonnement ionisant de façon à former des zones irradiées dans le film,
   c) mettre en forme thermiquement le film pour obtenir un corps moulé, la température demeurant au-dessous de la température de fusion du matériau synthétique thermoplastique,
   d) éliminer les zones irradiées, de sorte qu'il se forme des pores dans le corps moulé,
   e) extraire le corps moulé.

15. Procédé conforme à la revendication 14,
**caractérisé en ce que**
l'irradiation du film est effectuée au travers d'un masque.

16. Procédé conforme à la revendication 14 ou 15,
**caractérisé en ce que**
l'irradiation du film est effectuée avec des ions lourds.

17. Procédé conforme à la revendication 16,
**caractérisé en ce que**
les ions lourds ont une énergie spécifique située au-dessus de 0,1 MeV/nucléon.

18. Procédé conforme à l'une des revendications 14 à 17,
**caractérisé en ce que**
l'élimination des zones irradiées s'effectue par gravure chimique par voie humide.

19. Utilisation d'un corps moulé conforme à l'une des revendications 1 à 13, entant que filtre ou vaporisateur.

20. Utilisation d'un corps moulé conforme à l'une des revendications 1 à 13, entant que boitier pour des éléments micro-structurés.

**21.** Utilisation d'un corps moulé conforme à l'une des revendications 1 à 13, pour immobiliser des molécules inorganiques ou organiques, des biomolécules, des cellules procaryotes ou eucaryotes.

**22.** Utilisation d'un corps moulé conforme à l'une des revendications 1 à 13, pour la culture de cellules procaryotes ou eucaryotes.

**23.** Utilisation d'un corps moulé conforme à l'une des revendications 1 à 13, entant que capteur ou réacteur biologique.

## Fig. 1

## Fig. 2

# Fig. 3

a)

b)

c)

# Fig. 4

# Fig. 5

a)

b)

c)

d)

e)

f)

EP 1 768 833 B1

Fig. 6

IMT/FZK  JCD1_0041W 279  A10          100 µm

Fig. 7

IMT/FZK  JCD1_0041W 279  A4          100 µm

## Fig. 8

IMT/FZK JCD1_0041W 279 A5 — 100 µm

## Fig. 9

IMT/FZK JCD1_0041W 279 A1 — 500 µm

## Fig. 10

IMT/FZK JCD1_0041W 279 A2 — 20 µm

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 305123 A
- US 4364723 A
- WO 2004040206 A
- DE 4132379 A1